# EUROPEAN PATENT APPLICATION

(11) **EP 4 617 316 A1**
(43) Date of publication of application: **17.09.2025**
(21) Application number: 23889119.6
(22) Date of filing: 07.11.2023
(51) Int. Cl.: C08L 55/02, C08L 51/04, C08L 51/06, C08L 23/08, C08L 77/00, C08L 77/12, C08K 5/098, C08K 9/12

(54) **THERMOPLASTIC RESIN COMPOSITION**

(30) Priority: 08.11.2022 KR 20220147651
(71) Applicant: LG CHEM, LTD., Seoul 07336 (KR)
(72) Inventor: KIM, Seong Kyun, Daejeon 34122 (KR); KIM, Seo Hwa, Daejeon 34122 (KR); HAN, Se Jin, Daejeon 34122 (KR); KIM, Yeong Min, Daejeon 34122 (KR)
(74) Representative: Goddar, Heinz J.
(86) International application number: PCT/KR2023/017794
(87) International publication number: WO 2024/101861

(57) **Abstract**

The present invention relates to a thermoplastic resin composition including: a base resin including a recycled resin, a virgin acrylic graft polymer, a virgin diene-based graft polymer, and a virgin vinyl-based non-grafted polymer; and an additive including a first antimicrobial agent, which includes a polyamide-based elastomer, an olefin-based non-grafted polymer, a metal stearate, and zinc ions supported on a silica glass support, and a second antimicrobial agent, which includes silver ions supported on a phosphate glass support, wherein 0.20 to 2.00 parts by weight of the first antimicrobial agent and 0.02 to 0.50 parts by weight of the second antimicrobial agent are included based on 100 parts by weight of the base resin.

## Description

### Technical Field

### [Cross-Reference to Related Application]

The present invention claims priority to and the benefit of Korean Patent Application No. 10-2022-0147651, filed on November 8, 2022, the entire contents of which are incorporated herein by reference.

### [Technical Field]

The present invention relates to a thermoplastic resin composition.

### Background Art

With the increasing attention to personal health and hygiene and rising income levels, there is a growing demand for thermoplastic resin molded products with an antimicrobial hygiene function. As an increasing number of thermoplastic resin molded products that can remove or reduce bacteria from the surface of household goods and home appliances are produced, it is required to develop functional antimicrobial materials with stability and reliability.

In order to produce an antimicrobial thermoplastic resin composition, antimicrobial agents need to be added, and these antimicrobial agents can be divided into an organic antimicrobial agent and an inorganic antimicrobial agent. The organic antimicrobial agent may be harmful to the human body, and is decomposed when processed at high temperatures, and thus its antimicrobial effect can be lost or reduced, and it cannot be used in various fields due to its poor antimicrobial persistence. On the other hand, the inorganic antimicrobial agent has excellent thermal stability, but when processed at high temperatures, dispersing the inorganic antimicrobial agent is challenging or discoloration can occur, and it cannot be used in various fields because its antimicrobial persistence is reduced due to continuous elution of metal ions supported on supports.

Therefore, studies have been conducted on antimicrobial thermoplastic resin compositions that are harmless to the human body, maintain their antimicrobial ability even when processed at high temperatures, and can be used in various fields due to their good antimicrobial persistence.

### [Related-Art Documents]

### [Patent Documents]

(Patent Document 1) JP1997-241475A

### Disclosure

### Technical Problem

The present invention is directed to providing a thermoplastic resin composition with excellent antimicrobial properties, antimicrobial persistence, chemical resistance, appearance characteristics, and impact resistance.

### Technical Solution

In order to solve the above-mentioned problems, 1) the present invention provides a thermoplastic resin composition which includes: a base resin including a recycled resin, a virgin acrylic graft polymer, a virgin diene-based graft polymer, and a virgin vinyl-based non-grafted polymer; and an additive including a first antimicrobial agent, which includes a polyamide-based elastomer, an olefin-based non-grafted polymer, a metal stearate, and zinc ions supported on a silica glass support, and a second antimicrobial agent, which includes silver ions supported on a phosphate glass support, wherein 0.20 to 2.00 parts by weight of the first antimicrobial agent and 0.02 to 0.50 parts by weight of the second antimicrobial agent are included based on 100 parts by weight of the base resin.

2) According to 1), the present invention provides a thermoplastic resin composition, wherein a weight ratio of the first antimicrobial agent and the second antimicrobial agent is 1:0.10 to 0.50.

3) According to 1) or 2), the present invention provides a thermoplastic resin composition, wherein the polyamide-based elastomer has a weight-average molecular weight of 1,000 to 350,000 g/mol.

4) According to any one of 1) to 3), the present invention provides a thermoplastic resin composition, wherein the polyamide-based elastomer includes one or more of polyetheramide and polyetheresteramide.

5) According to any one of 1) to 4), the present invention provides a thermoplastic resin composition including 0.10 to 10.00 parts by weight of the polyamide-based elastomer based on 100 parts by weight of the base resin.

6) According to any one of 1) to 5), the present invention provides a thermoplastic resin composition, wherein the olefin-based non-grafted polymer includes: an olefin-based monomer unit; and one or more of a vinyl acetate-based monomer unit and an alkyl (meth)acrylate-based monomer unit.

7) According to 6), the present invention provides a thermoplastic resin composition, wherein the olefin-based non-grafted polymer includes: 68.0 to 80.0 wt% of the olefin-based monomer unit; and 20.0 to 32.0 wt% of one or more of the vinyl acetate-based monomer unit and the alkyl (meth)acrylate-based monomer unit.

8) According to any one of 1) to 7), the present invention provides a thermoplastic resin composition including 0.50 to 5.00 parts by weight of the olefin-based non-grafted polymer based on 100 parts by weight of the base resin.

9) According to any one of 1) to 8), the present invention provides a thermoplastic resin composition, wherein the metal stearate includes one or more of potassium stearate, calcium stearate, sodium stearate, magnesium stearate, and aluminum stearate.

10) According to any one of 1) to 9), the present invention provides a thermoplastic resin composition including 0.05 to 3.00 parts by weight of the metal stearate based on 100 parts by weight of the base resin.

11) According to any one of 1) to 10), the present invention provides a thermoplastic resin composition, wherein the recycled resin includes a diene-based rubber polymer, a vinyl cyanide-based monomer unit, and an aromatic vinyl-based monomer unit.

12) According to any one of 1) to 11), the present invention provides a thermoplastic resin composition, wherein the recycled resin includes 10 to 30 wt% of a diene-based rubber polymer, 15 to 30 wt% of a vinyl cyanide-based monomer unit, and a balance as an aromatic vinyl-based monomer unit.

13) According to any one of 1) to 12), the present invention provides a thermoplastic resin composition including 15.00 to 70.00 parts by weight of the recycled resin based on 100 parts by weight of the base resin.

14) According to any one of 1) to 13), the present invention provides a thermoplastic resin composition, wherein the virgin acrylic graft polymer includes: an acrylic rubber polymer; and a shell including an aromatic vinyl-based monomer unit and a vinyl cyanide-based monomer unit that are grafted to the acrylic rubber polymer.

15) According to any one of 1) to 14), the present invention provides a thermoplastic resin composition including 1.00 to 10.00 parts by weight of the virgin acrylic graft polymer based on 100 parts by weight of the base resin.

16) According to any one of 1) to 15), the present invention provides a thermoplastic resin composition, wherein the virgin diene-based graft polymer includes: a diene-based rubber polymer; and a shell including an aromatic vinyl-based monomer unit and a vinyl cyanide-based monomer unit that are grafted to the diene-based rubber polymer.

17) According to any one of 1) to 16), the present invention provides a thermoplastic resin composition including 5.00 to 30.00 parts by weight of the virgin diene-based graft polymer based on 100 parts by weight of the base resin.

18) According to any one of 1) to 17), the present invention provides a thermoplastic resin composition, wherein the virgin vinyl-based non-grafted polymer includes an aromatic vinyl-based monomer unit and a vinyl cyanide-based monomer unit.

### Advantageous Effects

A thermoplastic resin composition of the present invention has excellent antimicrobial properties and antimicrobial persistence while maintaining its basic physical properties such as chemical resistance, appearance characteristics, and impact resistance. Therefore, the thermoplastic resin composition can be used as a raw material for various antimicrobial products.

### Modes of the Invention

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

In the present invention, an average particle diameter may be measured by dynamic light scattering, and specifically, the average particle diameter may refer to an arithmetic mean particle diameter in the particle size distribution as measured by dynamic light scattering, that is, an average particle diameter based on a scattering intensity distribution.

In the present invention, the average particle diameter may be measured using a Nicomp 380 instrument commercially available from Particle Sizing Systems.

In the present invention, a weight-average molecular weight of a vinyl-based non-grafted polymer may be measured as a relative value with respect to a standard polystyrene sample by gel permeation chromatography using tetrahydrofuran as an eluent.

In the present invention, a weight-average molecular weight of a polyamide-based elastomer may be measured by gel permeation chromatography after dissolving the polyamide-based elastomer in a tetrahydrofuran (THF) solution at a concentration of 1 mg/ml and filtering the solution through a 450 nm syringe filter.

In the present invention, a diene-based monomer may be one or more of 1,3-butadiene, isoprene, chloroprene, and piperylene, with 1,3-butadiene being preferred.

In the present invention, an alkyl (meth)acrylate-based monomer may be a term encompassing an alkyl acrylate-based monomer and an alkyl methacrylate-based monomer. The alkyl (meth)acrylate-based monomer may be a C₁-C₁₀ alkyl (meth)acrylate-based monomer and one or more of methyl (meth)acrylate, ethyl (meth)acrylate, propyl (meth)acrylate, butyl (meth)acrylate, heptyl (meth)acrylate, hexyl (meth)acrylate, 2-ethylhexyl (meth)acrylate, and decyl (meth)acrylate, with butyl acrylate being preferred.

In the present invention, an aromatic vinyl-based monomer may be one or more of styrene, α-methyl styrene, α-ethyl styrene, and p-methyl styrene, with styrene being preferred.

In the present invention, a vinyl cyanide-based monomer may be one or more of acrylonitrile, methacrylonitrile, phenyl acrylonitrile, and α-chloroacrylonitrile, with acrylonitrile being preferred.

In the present invention, an olefin-based monomer may be one or more of ethylene, propylene, and butylene, with ethylene being preferred.

### Thermoplastic resin composition

A thermoplastic resin composition according to an embodiment of the present invention includes: 1. a base resin including a recycled resin, a virgin acrylic graft polymer, a virgin diene-based graft polymer, and a virgin vinyl-based non-grafted polymer; and an additive including a first antimicrobial agent, including a polyamide-based elastomer, an olefin-based non-grafted polymer, a metal stearate, and zinc ions supported on a silica glass support, and a second antimicrobial agent, including silver ions supported on a phosphate glass support, wherein 0.20 to 2.00 parts by weight of the first antimicrobial agent and 0.02 to 0.50 parts by weight of the second antimicrobial agent are included based on 100 parts by weight of the base resin.

Hereinafter, components of the thermoplastic resin composition according to an embodiment of the present invention will be described in detail.

### 1. Base resin

### 1) Recycled resin

A recycled resin is a component included in a thermoplastic resin composition to be certified as an eco-friendly product and is a recycled product that is reused by processing used resins or resin waste. Specifically, the recycled resin may be resin waste which can be reused after being collected, crushed, washed, separated and sorted, and processed for various purposes. The form of the recycled resin is not particularly limited.

The recycled resin may include one or more of recycled polyethylene, recycled polypropylene, recycled polyester, recycled polystyrene, recycled polyamide, recycled polycarbonate, a recycled diene-based graft polymer, and a recycled vinyl-based non-grafted polymer.

The recycled resin may include a diene-based rubber polymer, a vinyl cyanide-based monomer unit, and an aromatic vinyl-based monomer unit. The diene-based rubber polymer may improve the impact resistance of the recycled resin. The vinyl cyanide-based monomer unit may improve the chemical resistance of the recycled resin. In addition, the aromatic vinyl-based monomer unit may improve the processability of the recycled resin.

The recycled resin may include 10.0 to 30.0 wt% of a diene-based rubber polymer, preferably 10.0 to 25.0 wt%, more preferably 10.0 to 20.0 wt%. When this condition is satisfied, the impact resistance of the recycled resin may be further improved.

The recycled resin may include 15.0 to 30.0 wt% of a vinyl cyanide-based monomer unit, preferably 16.0 to 27.0 wt%, more preferably 18.0 to 24.0 wt%. When this condition is satisfied, the chemical resistance of the recycled resin may be further improved.

The recycled resin may include a balance as an aromatic vinyl-based monomer unit so that a total weight of the recycled resin becomes 100 wt%.

The thermoplastic resin composition may include the recycled resin in an amount of 15.00 to 70.00 parts by weight, preferably 15.00 to 65.00 parts by weight, more preferably 20.00 to 60.00 parts by weight based on 100 parts by weight of the base resin. When this condition is satisfied, a carbon reduction effect and an adequate level of physical properties may be achieved.

### 2) Virgin acrylic graft polymer

A virgin acrylic graft polymer is an acrylic graft polymer that has never been used and is a component that improves the weather resistance and impact resistance of the thermoplastic resin composition.

The virgin acrylic graft polymer may include: an acrylic rubber polymer; and a shell including an aromatic vinyl-based monomer unit and a vinyl cyanide-based monomer unit that are grafted to the acrylic rubber polymer. The shell may include an aromatic vinyl-based monomer unit and a vinyl cyanide-based monomer unit that are not grafted to the acrylic rubber polymer.

The acrylic rubber polymer may be prepared by polymerizing, specifically cross-linking, alkyl (meth)acrylate-based monomers. The acrylic rubber polymer may have an average particle diameter of 50 to 600 nm, preferably 100 to 550 nm, more preferably 120 to 500 nm. When this condition is satisfied, impact resistance and weather resistance may be improved.

The virgin acrylic graft polymer may include the acrylic rubber polymer in an amount of 30.0 to 70.0 wt%, preferably 35.0 to 65.0 wt%, more preferably 40.0 to 60.0 wt%. When this condition is satisfied, the impact resistance and weather resistance of the acrylic graft polymer may be further improved.

The virgin acrylic graft polymer may include the aromatic vinyl-based monomer unit in an amount of 20.0 to 60.0 wt%, preferably 25.0 to 55.0 wt%, more preferably 30.0 to 50.0 wt%. When this condition is satisfied, the processability of the acrylic graft polymer may be further improved.

The virgin acrylic graft polymer may include the vinyl cyanide-based monomer unit in an amount of 1.0 to 30.0 wt%, preferably 3.0 to 25.0 wt%, more preferably 5.0 to 20.0 wt%. When this condition is satisfied, the chemical resistance of the acrylic graft polymer may be further improved.

The thermoplastic resin composition may include 1.00 to 10.00 parts by weight, preferably 1.50 to 8.50 parts by weight, more preferably 2.00 to 7.00 parts by weight of the virgin acrylic graft polymer based on 100 parts by weight of the base resin. When this condition is satisfied, the weather resistance and impact resistance of the thermoplastic resin composition may be further improved.

### 3) Virgin diene-based graft polymer

A virgin diene-based graft polymer is a diene-based graft polymer that has never been used and is a component that improves the impact resistance of the thermoplastic resin composition.

The virgin diene-based graft polymer may include a diene-based rubber polymer; and a shell including an aromatic vinyl-based monomer unit and a vinyl cyanide-based monomer unit that are grafted to the diene-based rubber polymer. The shell may include an aromatic vinyl-based monomer unit and a vinyl cyanide-based monomer unit that are not grafted to the diene-based rubber polymer.

The diene-based rubber polymer may be prepared by cross-linking diene-based monomers or monomer mixtures containing the diene-based monomer as a main component.

The diene-based rubber polymer may have an average particle diameter of 50 to 600 nm, preferably 150 to 450 nm, more preferably 200 to 400 nm. When this condition is satisfied, the impact resistance of the virgin diene-based graft polymer may be improved.

The virgin diene-based graft polymer may include the diene-based rubber polymer in an amount of 40.0 to 80.0 wt%, preferably 45.0 to 75.0 wt%, more preferably 50.0 to 70.0 wt%. When this condition is satisfied, the impact resistance of the virgin diene-based graft polymer may be further improved.

The virgin diene-based graft polymer may include the aromatic vinyl-based monomer unit in an amount of 10.0 to 50.0 wt%, preferably 15.0 to 45.0 wt%, more preferably 20.0 to 40.0 wt%. When this condition is satisfied, the processability of the virgin diene-based graft polymer may be further improved.

The virgin diene-based graft polymer may include the vinyl cyanide-based monomer unit in an amount of 1.0 to 30.0 wt%, preferably 3.0 to 27.0 wt%, more preferably 5.0 to 25.0 wt%. When this condition is satisfied, the chemical resistance of the virgin diene-based graft polymer may be further improved.

The thermoplastic resin composition may include 5.00 to 30.00 parts by weight, preferably 7.00 to 27.00 parts by weight, more preferably 10.00 to 25.00 parts by weight, of the virgin diene-based graft polymer based on 100 parts by weight of the base resin. When this condition is satisfied, the impact resistance of the thermoplastic resin composition may be further improved.

### 4) Virgin vinyl-based non-grafted polymer

A virgin vinyl-based non-grafted polymer is a component that improves the processability of the thermoplastic resin composition.

The virgin vinyl-based non-grafted polymer may include an aromatic vinyl-based monomer unit and a vinyl cyanide-based monomer unit. Specifically, the virgin vinyl-based non-grafted polymer may include the aromatic vinyl-based monomer unit to improve processability and include the vinyl cyanide-based monomer to improve chemical resistance.

The virgin vinyl-based non-grafted polymer may include the aromatic vinyl-based monomer unit and the vinyl cyanide-based monomer unit in a weight ratio of 90.0:10.0 to 60.0:40.0, preferably 85.0:15.0 to 65.0:35.0, more preferably 80.0:20.0 to 70.0:30.0. When this condition is satisfied, a virgin vinyl-based non-grafted polymer with harmoniously improved processability and chemical resistance may be prepared.

The thermoplastic resin composition may include the virgin vinyl-based non-grafted polymer as the balance so that a total amount of the components of the base resin becomes 100 parts by weight.

### 2. Additive

### 1) Polyamide-based elastomer

A polyamide-based elastomer is a component that improves the antimicrobial persistence of the thermoplastic resin composition. Specifically, as the elution rate of metal ions of an inorganic antimicrobial agent is controlled to be constant but slow due to the lone pair of electrons of the polyamide-based elastomer, the antimicrobial persistence of the thermoplastic resin composition may be significantly improved.

The polyamide-based elastomer may include one or more of polyetheramide and polyetheresteramide. In addition, the polyamide-based elastomer may include a hard segment including one or more of PA6, PA66, PA6/66, PA610, PA612, PA614, and PA616, and a soft segment in a form of a polyether segment functionalized with OH⁻ or NH₂⁻.

A weight-average molecular weight of the polyamide-based elastomer may be 1,000 to 350,000 g/mol, preferably 10,000 to 340,000 g/mol, more preferably 50,000 to 335,000 g/mol, most preferably 150,000 to 300,000 g/mol. When this condition is satisfied, a thermoplastic resin composition with improved antimicrobial persistence, impact resistance, appearance quality, and chemical resistance may be prepared.

The thermoplastic resin composition may include 0.10 to 10.00 parts by weight, preferably 0.10 to 7.00 parts by weight, more preferably 0.10 to 5.00 parts by weight, of the polyamide-based elastomer based on 100 parts by weight of the base resin. When this condition is satisfied, a thermoplastic resin composition with improved antimicrobial persistence and further improved impact resistance, appearance quality, and chemical resistance may be prepared.

### 2) Olefin-based non-grafted polymer

An olefin-based non-grafted polymer is a component that improves the antimicrobial persistence and chemical resistance of the thermoplastic resin composition.

The olefin-based non-grafted polymer may include: an olefin-based monomer unit; and one or more of a vinyl acetate-based monomer unit and an alkyl (meth)acrylate-based monomer unit to improve the antimicrobial persistence, chemical resistance, and appearance characteristics of the thermoplastic resin composition.

The olefin-based non-grafted polymer may include the olefin-based monomer unit in an amount of 68.0 to 80.0 wt%, preferably 70.0 to 78.0 wt%, more preferably 71.0 to 76.0 wt%. The olefin-based non-grafted polymer may include one or more of the vinyl acetate-based monomer unit and the alkyl (meth)acrylate-based monomer unit in an amount of 20.0 to 32.0 wt%, preferably 22.0 to 30.0 wt%, more preferably 24.0 to 29.0 wt%. When this condition is satisfied, the antimicrobial persistence, chemical resistance, and appearance characteristics of the thermoplastic resin composition may be further improved.

The olefin-based non-grafted polymer may be one or more of an ethylene-vinyl acetate polymer, an ethylene-methyl acrylate polymer, and an ethylene-butyl acrylate polymer.

The thermoplastic resin composition may include 0.50 to 5.00 parts by weight, preferably 0.70 to 4.00 parts by weight, more preferably 1.00 to 3.00 parts by weight, of the olefin-based non-grafted polymer based on 100 parts by weight of the base resin. When this condition is satisfied, the olefin-based non-grafted polymer may be evenly dispersed in the thermoplastic resin composition, and the appearance characteristics, antimicrobial persistence, and chemical resistance of the thermoplastic resin composition may be improved.

### 3) Metal stearate

A metal stearate is a component that improves the antimicrobial persistence of thermoplastic resin compositions including a recycled resin.

The recycled resin may include a halogen element, and in order to prevent the halogen element from reacting with zinc and silver ions included in first and second antimicrobial agents respectively, it is preferable that the metal stearate includes a metal that is more reactive than the zinc and silver ions included in the first and second antimicrobial agents respectively. Therefore, the metal stearate may include one or more of potassium stearate, calcium stearate, sodium stearate, magnesium stearate, and aluminum stearate, with one or more of calcium stearate and magnesium stearate being preferred.

The thermoplastic resin composition may include 0.05 to 3.00 parts by weight, preferably 0.05 to 2.50 parts by weight, more preferably 0.05 to 2.00 parts by weight, of the metal stearate based on 100 parts by weight of the base resin. When this condition is satisfied, the antimicrobial persistence of the thermoplastic resin composition may be further improved.

### 4) First antimicrobial agent

A first antimicrobial agent is a component that includes zinc ions supported on a silica glass support, reduces the manufacturing costs of the thermoplastic resin composition, and improves antimicrobial properties and antimicrobial persistence.

The thermoplastic resin composition may include 0.20 to 2.00 parts by weight, preferably 0.20 to 1.70 parts by weight, more preferably 0.20 to 1.50 parts by weight, of the first antimicrobial agent based on 100 parts by weight of the base resin. When the first antimicrobial agent is included in a smaller amount than the above-mentioned condition, the antimicrobial properties and antimicrobial persistence of the thermoplastic resin composition are significantly reduced. When the first antimicrobial agent is included in a larger amount than the above-mentioned condition, the impact resistance of the thermoplastic resin composition is significantly reduced.

### 5) Second antimicrobial agent

A second antimicrobial agent includes silver ions supported on a phosphate glass support. The second antimicrobial agent is a component that improves the antimicrobial properties and antimicrobial persistence of the thermoplastic resin composition. The second antimicrobial agent has excellent antimicrobial persistence because the elution rate of silver ions of the second antimicrobial agent is kept slow due to the phosphate glass support.

The second antimicrobial agent does not reduce the physical properties of the virgin diene-based graft polymer and the virgin acrylic graft polymer due to excellent compatibility with the virgin diene-based graft polymer and the virgin acrylic graft polymer. However, when the thermoplastic resin composition includes an antimicrobial agent including silver ions supported on a zirconium phosphate support instead of the second antimicrobial agent, antimicrobial properties and antimicrobial persistence may be improved, but compatibility with the virgin diene-based graft polymer and the virgin acrylic graft polymer is reduced, and therefore, the impact resistance of the thermoplastic resin composition may be reduced.

The thermoplastic resin composition may include 0.02 to 0.50 parts by weight, preferably 0.02 to 0.40 parts by weight, more preferably 0.02 to 0.30 parts by weight, of the second antimicrobial agent based on 100 parts by weight of the base resin. When the second antimicrobial agent is included in a smaller amount than the above-mentioned condition, the antimicrobial properties and antimicrobial persistence of the thermoplastic resin composition are significantly reduced. When the second antimicrobial agent is included in a larger amount than the above-mentioned condition, the antimicrobial properties and antimicrobial persistence of the thermoplastic resin composition are reduced, and manufacturing costs are undesirably increased.

A weight ratio of the first antimicrobial agent and the second antimicrobial agent may be 1:0.01 to 0.50, preferably 1:0.01 to 0.40, more preferably 1:0.01 to 0.20. When this condition is satisfied, the overall physical properties of the thermoplastic resin composition may be in harmony, with improved antimicrobial persistence.

Hereinafter, examples of the present invention will be described in detail so that those skilled in the art can easily carry out the present invention. However, the present invention may be embodied in several different forms and is not limited to the examples described herein.

### Examples and Comparative Examples

Descriptions of the components used in the examples and comparative examples below are as follows.

### 1. Base resin

1) Recycled resin: including 15 wt% butadiene rubber polymer, 21 wt% acrylonitrile units, and 64 wt% styrene units
2) Virgin acrylic graft polymer: ASA graft polymer including 50.0 wt% of a butyl acrylate rubber polymer having an average particle diameter of 140 nm and a shell including 36.5 wt% of styrene monomer units and 13.5 wt% of acrylonitrile monomer units that are grafted to the butyl acrylate rubber polymer
3) Virgin diene-based graft polymer: ABS graft polymer including 60.0 wt% of a butadiene rubber polymer having an average particle diameter of 300 nm and a shell including 30.0 wt% of styrene monomer units and 10.0 wt% of acrylonitrile monomer units that are grafted to the butadiene rubber polymer
4) Virgin vinyl-based non-grafted polymer: Styrene/acrylonitrile polymer including 76.0 wt% of styrene monomer units and 24.0 wt% of acrylonitrile monomer units

### 2. Additive

### 1) Polyamide-based elastomer

(1): Polyetheramide 1: MH 2030 (weight-average molecular weight: 150,000 g/mol) commercially available from AKEMA
(2) Polyetheramide 2: Pelestat 6500 (weight-average molecular weight: 300,000 g/mol) commercially available from Sanyo Chemical

### 2) Olefin-based non-grafted polymer

(1) Random ethylene-methyl acrylate polymer 1: LOTRYL 24MA02T (ethylene monomer units: 76.0 wt%, methyl acrylate monomer units: 24.0 wt%, melt flow index (ASTM D1238, 190 °C, 2.16 kg): 2.0 g/10 min, melting point (ISO 11357-3): 95 °C) commercially available from SK Geo Centric Co., Ltd
(2) Random ethylene-methyl acrylate polymer 2: LOTRYL 29MA03T (ethylene monomer units: 71.0 wt%, methyl acrylate monomer units: 29.0 wt%, melt flow index (ASTM D1238, 190 °C, 2.16 kg): 3.0 g/10 min), melting point (ISO 11357-3): 92 °C) commercially available from SK Geo Centric Co., Ltd

### 3) Metal stearate

(1) Calcium stearate
(2) Magnesium stearate

### 4) First antimicrobial agent: VZ600 commercially available from Toagosei Co., Ltd. (zinc ions supported on a silica glass support)

### 5) Second antimicrobial agent: IONPURE WPA commercially available from Ishizuka Glass Co., Ltd. (silver ions supported on a phosphate glass support)

The components described above were mixed in amounts shown in Tables 1 to 6 below and stirred to prepare thermoplastic resin compositions.

### Experimental Example 1

Each thermoplastic resin composition of the examples and comparative examples was put into a twin-screw extruder set at 230 °C and extruded to prepare a pellet. The pellet was injection-molded to prepare a sample, and physical properties were evaluated using the methods described below and results thereof are shown in Tables 1 to 6 below.
(1) Antimicrobial activity: According to the ISO 22196 antimicrobial evaluation method, 5 cm×5 cm×0.3 cm samples were inoculated with Escherichia coli and Staphylococcus aureus, respectively, and incubated at 35 °C and 90% relative humidity for 24 hours to measure antimicrobial activity.
(2) Antimicrobial persistence (after pretreatment): According to the ISO 22196 antimicrobial evaluation method, 5 cm×5 cm×0.3 cm samples were immersed in water at 50 °C for 32 hours, inoculated with Escherichia coli and Staphylococcus aureus, respectively, and incubated at 35 °C and 90% relative humidity for 24 hours to measure antimicrobial activity.
(3) Appearance quality: Each injection-molded sample with a curved surface was scratched with a knife and folded, and the condition of the folded surface was evaluated with the naked eye.
   ∘: No peeling occurred
   △: Peeling occurred on the folded surface when an additional force was applied after scratching with a knife and folding the injection-molded sample
   ×: Peeling occurred on the folded surface even when no force was applied after scratching with a knife and folding the injection-molded sample
(4) Chemical resistance: A sample fixed on a jig at a strain rate of 1.1% was immersed in cyclopentane for 3 minutes and subjected to a 180° bending test.
   ∘: No change
   △: Occurrence of small cracks
   ×: Fracture after occurrence of cracks
(5) Impact strength (kg·cm/cm, 1/4 In): IZOD impact strength was measured at 25 °C according to ASTM D265. When the IZOD impact strength was 20 kg·cm/cm or more, impact resistance was judged to be excellent.

**[Table 1]**

| Classification | | Example 1 | Example 2 | Example 3 | Example 4 |
|---|---|---|---|---|---|
| Base resin (parts by weight) | Recycled resin | 24.00 | 24.00 | 24.00 | 24.00 |
| | Virgin acrylic graft polymer | 3.00 | 3.00 | 3.00 | 3.00 |
| | Virgin diene-based graft polymer | 20.00 | 20.00 | 20.00 | 20.00 |
| | Virgin vinyl-based non-grafted polymer | 53.00 | 53.00 | 53.00 | 53.00 |
| Additive (parts by weight) | Polyetheramide 1 | 2.00 | 2.00 | 2.00 | 2.00 |
| | Polyetheramide 2 | 0.00 | 0.00 | 0.00 | 0.00 |
| | Random ethylene-methyl acrylate polymer 1 | 2.00 | 0.00 | 2.00 | 2.00 |
| | Random ethylene-methyl acrylate polymer 2 | 0.00 | 2.00 | 0.00 | 0.00 |
| | Calcium stearate | 0.20 | 0.20 | 0.20 | 0.20 |
| | Magnesium stearate | 0.00 | 0.00 | 0.00 | 0.00 |
| | Zinc ions supported on silica glass support | 0.20 | 1.00 | 1.50 | 2.00 |
| | Silver ions supported on phosphate glass support | 0.10 | 0.10 | 0.10 | 0.10 |
| Weight ratio of first antimicrobial agent and second antimicrobial agent | | 1:0.50 | 1:0.10 | About 1:0.07 | 1:0.05 |
| Antimicrobial activity | Escherichia coli | 6.0 | 7.0 | 7.0 | 7.0 |
| | Staphylococcus aureus | 5.6 | 6.2 | 6.2 | 6.2 |
| Antimicrobial persistence (after pretreatment) | Escherichia coli | 5.8 | 7.0 | 7.0 | 7.0 |
| | Staphylococcus aureus | 5.1 | 6.2 | 6.2 | 6.2 |
| Appearance quality | | ○ | ○ | ○ | ○ |
| Chemical resistance | | ○ | ○ | ○ | ○ |
| Impact strength | | 25 | 23 | 21 | 20 |

**[Table 2]**

| Classification | | Example 5 | Example 6 | Example 7 | Example 8 |
|---|---|---|---|---|---|
| Base resin (parts by weight) | Recycled resin | 24.00 | 24.00 | 24.00 | 24.00 |
| | Virgin acrylic graft polymer | 3.00 | 3.00 | 3.00 | 3.00 |
| | Virgin diene-based graft polymer | 20.00 | 20.00 | 20.00 | 20.00 |
| | Virgin vinyl-based non-grafted polymer | 53.00 | 53.00 | 53.00 | 53.00 |
| Additive (parts by weight) | Polyetheramide 1 | 2.00 | 2.00 | 2.00 | 2.00 |
| | Polyetheramide 2 | 0.00 | 0.00 | 0.00 | 0.00 |
| | Random ethylene-methyl acrylate polymer 1 | 2.00 | 2.00 | 2.00 | 2.00 |
| | Random ethylene-methyl acrylate polymer 2 | 0.00 | 0.00 | 0.00 | 0.00 |
| | Calcium stearate | 0.20 | 0.20 | 0.20 | 0.20 |
| | Magnesium stearate | 0.00 | 0.00 | 0.00 | 0.00 |
| | Zinc ions supported on silica glass support | 1.00 | 1.00 | 1.00 | 1.00 |
| | Silver ions supported on phosphate glass support | 0.20 | 0.30 | 0.40 | 0.50 |
| Weight ratio of first antimicrobial agent and second antimicrobial agent | | 1:0.20 | 1:0.30 | 1:0.40 | 1:50 |
| Antimicrobial activity | Escherichia coli | 7.0 | 7.0 | 7.0 | 7.0 |
| | Staphylococcus aureus | 6.2 | 6.2 | 6.2 | 6.2 |
| Antimicrobial persistence (after pretreatment) | Escherichia coli | 7.0 | 7.0 | 7.0 | 7.0 |
| | Staphylococcus aureus | 6.2 | 6.2 | 6.2 | 6.2 |
| Appearance quality | | ○ | ○ | ○ | ○ |
| Chemical resistance | | ○ | ○ | ○ | ○ |
| Impact strength | | 23 | 22 | 22 | 22 |

**[Table 3]**

| Classification | | Example 9 | Example 10 | Example 11 | Example 12 | Example 13 |
|---|---|---|---|---|---|---|
| Base resin (parts by weight) | Recycled resin | 24.0 | 24.0 | 24.0 | 24.00 | 60.00 |
| | Virgin acrylic graft polymer | 3.00 | 3.00 | 3.00 | 3.00 | 3.00 |
| | Virgin diene-based graft polymer | 20.00 | 20.00 | 20.00 | 20.00 | 12.00 |
| | Virgin vinyl-based non-grafted polymer | 53.0 | 53.00 | 53.00 | 53.00 | 25.00 |
| Additive (parts by weight) | Polyetheramide 1 | 2.00 | 0.00 | 2.00 | 2.00 | 2.00 |
| | Polyetheramide 2 | 0.00 | 2.00 | 0.00 | 0.00 | 0.00 |
| | Random ethylene-methyl acrylate polymer 1 | 2.00 | 2.00 | 0.00 | 2.00 | 2.00 |
| | Random ethylene-methyl acrylate polymer 2 | 0.00 | 0.00 | 2.00 | 0.00 | 0.00 |
| | Calcium stearate | 0.20 | 0.20 | 0.20 | 0.00 | 0.20 |
| | Magnesium stearate | 0.00 | 0.00 | 0.00 | 0.20 | 0.00 |
| | Zinc ions supported on silica glass support | 1.00 | 1.00 | 1.00 | 1.00 | 1.00 |
| | Silver ions supported on phosphate glass support | 0.10 | 0.10 | 0.10 | 0.10 | 0.10 |
| Weight ratio of first antimicrobial agent and second antimicrobial agent | | 1:0.10 | 1:0.10 | 1:0.10 | 1:0.10 | 1:0.10 |
| | Escherichia coli | 7.0 | 7.0 | 7.0 | 7.0 | 7.0 |
| Antimicrobial activity | Staphylococcus aureus | 6.2 | 6.2 | 6.2 | 6.2 | 6.2 |
| Antimicrobial persistence (after pretreatment) | Escherichia coli | 7.0 | 7.0 | 7.0 | 7.0 | 7.0 |
| | Staphylococcus aureus | 6.2 | 6.2 | 6.2 | 6.2 | 6.2 |
| Appearance quality | | ○ | ○ | ○ | ○ | ○ |
| Chemical resistance | | ○ | ○ | ○ | ○ | ○ |
| Impact strength | | 25 | 25 | 23 | 25 | 24 |

**[Table 4]**

| Classification | | Comparative Example 1 | Comparative Example 2 | Comparative Example 3 | Comparative Example 4 | Comparative Example 5 |
|---|---|---|---|---|---|---|
| Base resin (parts by weight) | Recycled resin | 24.00 | 24.00 | 24.00 | 24.00 | 24.00 |
| | Virgin acrylic graft polymer | 3.00 | 3.00 | 3.00 | 3.00 | 3.00 |
| | Virgin diene-based graft polymer | 20.00 | 20.00 | 20.00 | 20.00 | 20.00 |
| | Virgin vinyl-based non-grafted polymer | 53.00 | 53.00 | 53.00 | 53.00 | 53.00 |
| Additive (parts by weight) | Polyetheramide 1 | 2.00 | 2.00 | 2.00 | 2.00 | 2.00 |
| | Polyetheramide 2 | 0.00 | 0.00 | 0.00 | 0.00 | 0.00 |
| | Random ethylene-methyl acrylate polymer 1 | 2.00 | 2.00 | 2.00 | 2.00 | 2.00 |
| | Random ethylene-methyl acrylate polymer 2 | 0.00 | 0.00 | 0.00 | 0.00 | 0.00 |
| | Calcium stearate | 0.20 | 0.20 | 0.20 | 0.20 | 0.20 |
| | Magnesium stearate | 0.00 | 0.00 | 0.00 | 0.00 | 0.00 |
| | Zinc ions supported on silica glass support | 0.10 | 0.10 | 2.10 | 2.50 | 1.00 |
| | Silver ions supported on phosphate glass support | 0.10 | 0.40 | 0.10 | 0.10 | 0.01 |
| Antimicrob ial activity | Escherichia coli | 3.0 | 5.0 | 6.3 | 7.0 | 7.0 |
| | Staphylococcus aureus | 2.2 | 3.2 | 5.8 | 6.2 | 6.2 |
| Antimicrob ial persistence (after pretreatme nt) | Escherichia coli | 1.7 | 2.0 | 6.1 | 7.0 | 3.5 |
| | Staphylococcus aureus | 1.2 | 1.2 | 5.3 | 6.2 | 2.2 |
| Appearance quality | | ○ | ○ | ○ | ○ | ○ |
| Chemical resistance | | ○ | ○ | ○ | ○ | ○ |
| Impact strength | | 29 | 20 | 16 | 16 | 26 |

**[Table 5]**

| Classification | | Comparative Example 6 | Comparative Example 7 | Comparative Example 8 | Comparative Example 9 | Comparative Example 10 |
|---|---|---|---|---|---|---|
| Base resin (parts by weight) | Recycled resin | 24.00 | 24.00 | 24.00 | 24.00 | 24.00 |
| | Virgin acrylic graft polymer | 3.00 | 0.00 | 3.00 | 3.00 | 3.00 |
| | Virgin diene-based graft polymer | 20.00 | 23.00 | 20.00 | 23.00 | 23.00 |
| | Virgin vinyl-based non-grafted polymer | 53.00 | 53.00 | 53.00 | 53.00 | 53.00 |
| Additive (parts by weight) | Polyetheramide 1 | 2.00 | 2.00 | 0.00 | 2.00 | 2.00 |
| | Polyetheramide 2 | 0.00 | 0.00 | 0.00 | 0.00 | 0.00 |
| | Random ethylene-methyl acrylate polymer 1 | 2.00 | 2.00 | 2.00 | 0.00 | 0.00 |
| | Random ethylene-methyl acrylate polymer 2 | 0.00 | 0.00 | 0.00 | 0.00 | 0.00 |
| | Calcium stearate | 0.20 | 0.20 | 0.20 | 0.20 | 0.00 |
| | Magnesium stearate | 0.00 | 0.00 | 0.00 | 0.00 | 0.00 |
| | Zinc ions supported on silica glass support | 1.00 | 1.00 | 1.00 | 1.00 | 1.00 |
| | Silver ions supported on phosphate glass support | 0.51 | 0.10 | 0.10 | 0.10 | 0.10 |
| Antimicrob ial activity | Escherichia coli | 6.6 | 7.0 | 7.0 | 6.6 | 4.2 |
| | Staphylococcus aureus | 5.7 | 6.2 | 6.2 | 6.1 | 3.8 |
| Antimicrob ial persistence (after pretreatme nt) | Escherichia coli | 6.0 | 7.0 | 2.0 | 6.2 | 2.6 |
| | Staphylococcus aureus | 5.4 | 6.2 | 1.8 | 4.9 | 1.2 |
| Appearance quality | | ○ | ○ | ○ | ○ | ○ |
| Chemical resistance | | ○ | ○ | ○ | ○ | ○ |
| Impact strength | | 19 | 19 | 23 | 19 | 19 |

**[Table 6]**

| Classification | | Comparative Example 11 | Comparative Example 12 | Comparative Example 13 |
|---|---|---|---|---|
| Base resin (parts by weight) | Recycled resin | 24.00 | 24.00 | 24.00 |
| | Virgin acrylic graft polymer | 3.00 | 3.00 | 3.00 |
| | Virgin diene-based graft polymer | 23.00 | 23.00 | 20.00 |
| | Virgin vinyl-based non-grafted polymer | 53.00 | 53.00 | 53.00 |
| Additive (parts by weight) | Polyetheramide 1 | 2.00 | 2.00 | 2.00 |
| | Polyetheramide 2 | 0.00 | 0.00 | 0.00 |
| | Random ethylene-methyl acrylate polymer 1 | 2.00 | 2.00 | 2.00 |
| | Random ethylene-methyl acrylate polymer 2 | 0.00 | 0.00 | 0.00 |
| | Calcium stearate | 0.20 | 0.20 | 0.20 |
| | Magnesium stearate | 0.00 | 0.00 | 0.00 |
| | Zinc ions supported on silica glass support | 0.00 | 1.10 | 1.00 |
| | Silver ions supported on phosphate glass support | 1.10 | 0.00 | 0.00 |
| | Silver ions supported on zirconium phosphate support | 0.00 | 0.00 | 0.10 |
| Antimicrobial activity | Escherichia coli | 3.8 | 4.4 | 6.7 |
| | Staphylococcus aureus | 3.2 | 3.6 | 6.0 |
| Antimicrobial persistence (after pretreatment) | Escherichia coli | 2.6 | 2.8 | 6.8 |
| | Staphylococcus aureus | 1.5 | 1.5 | 6.0 |
| Appearance quality | | ○ | ○ | ○ |
| Chemical resistance | | ○ | ○ | ○ |
| Impact strength | | 18 | 18 | 19 |

Referring to Tables 1 to 6, Examples 1 to 13 exhibited excellent antimicrobial properties, appearance quality, chemical resistance, and impact strength. However, Comparative Examples 1 and 2, which include a small amount of zinc ions supported on a silica glass support, had significantly reduced antimicrobial properties and antimicrobial persistence compared to Examples 1 to 13.

Comparative Examples 3 and 4, which include an excessive amount of zinc ions supported on a silica glass support, had significantly reduced impact strength compared to Examples 1 to 13.

Comparative Example 5, which includes a small amount of silver ions supported on a phosphate glass support, had significantly reduced antimicrobial persistence compared to Examples 1 to 13.

Comparative Example 6, which includes an excessive amount of silver ions supported on a phosphate glass support, had significantly reduced antimicrobial properties, antimicrobial persistence, and impact strength compared to Examples 1 to 13.

Comparative Example 7, which does not include a virgin acrylic graft polymer, had reduced impact strength compared to Examples 1 to 13.

Comparative Example 8, which does not include a polyamide-based elastomer, had significantly reduced antimicrobial persistence compared to Examples 1 to 13.

Comparative Example 9, which does not include an olefin-based non-grafted polymer, had significantly reduced antimicrobial properties, antimicrobial persistence, and impact strength compared to Examples 1 to 13.

Comparative Example 10, which does not include an olefin-based non-grafted polymer and a metal stearate, had significantly reduced antimicrobial properties, antimicrobial persistence, and impact strength compared to Examples 1 to 13.

Comparative Example 11, which does not include zinc ions supported on a silica glass support, had significantly reduced antimicrobial properties, antimicrobial persistence, and impact strength compared to Examples 1 to 13.

Comparative Example 12, which does not include silver ions supported on a phosphate glass support, had significantly reduced antimicrobial properties, antimicrobial persistence, and impact strength compared to Examples 1 to 13.

Comparative Example 13, which includes silver ions supported on a zirconium phosphate support instead of silver ions supported on a phosphate glass support, had significantly reduced impact strength compared to Examples 1 to 13.

## Claims

1. A thermoplastic resin composition comprising:
a base resin including a recycled resin, a virgin acrylic graft polymer, a virgin diene-based graft polymer, and a virgin vinyl-based non-grafted polymer; and
an additive including a first antimicrobial agent, which includes a polyamide-based elastomer, an olefin-based non-grafted polymer, a metal stearate, and zinc ions supported on a silica glass support, and a second antimicrobial agent, which includes silver ions supported on a phosphate glass support,
wherein 0.20 to 2.00 parts by weight of the first antimicrobial agent and 0.02 to 0.50 parts by weight of the second antimicrobial agent are included based on 100 parts by weight of the base resin.

2. The thermoplastic resin composition of claim 1, wherein a weight ratio of the first antimicrobial agent and the second antimicrobial agent is 1:0.10 to 0.50.

3. The thermoplastic resin composition of claim 1, wherein the polyamide-based elastomer has a weight-average molecular weight of 1,000 to 350,000 g/mol.

4. The thermoplastic resin composition of claim 1, wherein the polyamide-based elastomer includes one or more of polyetheramide and polyetheresteramide.

5. The thermoplastic resin composition of claim 1, comprising 0.10 to 10.00 parts by weight of the polyamide-based elastomer based on 100 parts by weight of the base resin.

6. The thermoplastic resin composition of claim 1, wherein the olefin-based non-grafted polymer includes: an olefin-based monomer unit; and one or more of a vinyl acetate-based monomer unit and an alkyl (meth)acrylate-based monomer unit.

7. The thermoplastic resin composition of claim 6, wherein the olefin-based non-grafted polymer includes: 68.0 to 80.0 wt% of the olefin-based monomer unit; and 20.0 to 32.0 wt% of one or more of the vinyl acetate-based monomer unit and the alkyl (meth)acrylate-based monomer unit.

8. The thermoplastic resin composition of claim 1, comprising 0.50 to 5.00 parts by weight of the olefin-based non-grafted polymer based on 100 parts by weight of the base resin.

9. The thermoplastic resin composition of claim 1, wherein the metal stearate includes one or more of potassium stearate, calcium stearate, sodium stearate, magnesium stearate, and aluminum stearate.

10. The thermoplastic resin composition of claim 1, comprising 0.05 to 3.00 parts by weight of the metal stearate based on 100 parts by weight of the base resin.

11. The thermoplastic resin composition of claim 1, wherein the recycled resin includes a diene-based rubber polymer, a vinyl cyanide-based monomer unit, and an aromatic vinyl-based monomer unit.

12. The thermoplastic resin composition of claim 1, wherein the recycled resin includes 10.0 to 30.0 wt% of a diene-based rubber polymer, 15.0 to 30.0 wt% of a vinyl cyanide-based monomer unit, and a balance as an aromatic vinyl-based monomer unit.

13. The thermoplastic resin composition of claim 1, comprising 15.00 to 70.00 parts by weight of the recycled resin based on 100 parts by weight of the base resin.

14. The thermoplastic resin composition of claim 1, wherein the virgin acrylic graft polymer includes: an acrylic rubber polymer; and a shell including an aromatic vinyl-based monomer unit and a vinyl cyanide-based monomer unit that are grafted to the acrylic rubber polymer.

15. The thermoplastic resin composition of claim 1, comprising 1.00 to 10.00 parts by weight of the virgin acrylic graft polymer based on 100 parts by weight of the base resin.

16. The thermoplastic resin composition of claim 1, wherein the virgin diene-based graft polymer includes: a diene-based rubber polymer; and a shell including an aromatic vinyl-based monomer unit and a vinyl cyanide-based monomer unit that are grafted to the diene-based rubber polymer.

17. The thermoplastic resin composition of claim 1, comprising 5.00 to 30.00 parts by weight of the virgin diene-based graft polymer based on 100 parts by weight of the base resin.

18. The thermoplastic resin composition of claim 1, wherein the virgin vinyl-based non-grafted polymer includes an aromatic vinyl-based monomer unit and a vinyl cyanide-based monomer unit.
